# EUROPEAN PATENT APPLICATION

(11) **EP 4 530 268 A1**
(43) Date of publication of application: **02.04.2025**
(21) Application number: 24198791.6
(22) Date of filing: 06.09.2024
(51) Int. Cl.: C03B 27/04, C03B 27/044

(54) **TEMPERING FURNACE AND METHOD FOR CONTROLLING TEMPERING FURNACE**

(30) Priority: 29.09.2023 FI 20236087
(71) Applicant: Glaston Finland Oy, 33731 Tampere (FI)
(72) Inventor: Vehmas, Jukka, 33731 Tampere (FI); Nurmi, Heikki, 33731 Tampere (FI)
(74) Representative: Papula Oy

(57) **Abstract**

A tempering furnace (100) for a glass sheet and a method for controlling thereof. The tempering furnace comprises a blower (7) connected to a channel system (3) for feeding air back in the tempering furnace. The channel system (3) comprises a division channel (4) arranged in the lengthwise direction (X) of the furnace, and plurality of blow enclosures having blow openings (6) from which hot air is discharged as jets in a convection heating zone (8) of the tempering furnace. A first closing device (1) is arranged in the channel system (3) and configured to provide a closed position and an open position. The first closing device (1) in its closed position is configured to divide the channel system (3) in a first and a second sections (A, B) so that air is allowed to flow through the first section (A) to blow openings (6) therein and prevented to flow in the second section (B) and blow openings (6) therein.

## Description

### BACKGROUND

The invention relates to a tempering furnace for a glass sheet.

The invention further relates to a method for controlling convection heating of a glass sheet in a tempering furnace.

Glass tempering furnaces using a forced convection heating are equipped with a high-temperature convection blower and a convection chamber to heat the glass in the furnace through forced convection. This is especially advantageous in tempering so called LOW-E coated glass (energy saving). The LOW-E coated glass is a film-based product composed of multiple layers of metal or other compounds coated on the surface of the glass, which has excellent thermal insulation effect and good light transmittance. Its coating layer has the characteristics of high transmission of visible light and high reflection of mid- and far-infrared rays, so it is also called low-emissivity glass. The convection heating is insensitive to said coatings and thus good heating of the glass can be obtained by forced convection systems. The need for overhead or top convection of the LOW-E coated glass increases with increasing thickness of the glass. Also, certain panels shapes of the LOW-E coated glass necessitate increased convection.

A problem with the forced convection systems is that they are expensive due to required high-effective blowers and heating components.

### BRIEF DESCRIPTION

Viewed from a first aspect, there can be provided a tempering furnace for a glass sheet, comprising a blower pressurizing air sucked from the tempering furnace, the blower connected to a channel system for feeding said air back in the tempering furnace, the channel system comprising a division channel, and plurality of blow enclosures connected to the division channel by connecting openings, which blow enclosures have blow openings from which hot air is discharged as jets in a convection heating zone of the tempering furnace, the tempering furnace further comprising a first closing device arranged in the channel system, said first closing device configured to provide a closed position and an open position, wherein the division channel is arranged in the lengthwise direction of the furnace, that the first closing device in its closed position is configured to divide the channel system in a first and a second sections in the lengthwise direction so that air is allowed to flow through the first section to blow openings therein, and prevented to flow in the second section and blow openings therein, thus creating a first convection heating zone in the tempering furnace shorter than the convection heating zone in the lengthwise direction of the tempering furnace, thereby adding convection of the glass sheet in the first convection heating zone, and that the tempering furnace further comprises a glass plate conveyor configured to move a glass sheet back and forth in the first convection heating zone.

Thereby a tempering furnace where a high hot air pressure is reached and thereby a highly effective convection of the glass may be achieved with a reasonable cost blower. Thus, the capital expenditure of the tempering furnace may be lowered. Furthermore, the running costs of the tempering furnace may be lower due to smaller blower and thus lower energy consumption. Particularly the costs of a blower withstanding high (about 700°C) temperatures are high. The costs of the blower and its electrical components increases significantly with the size of the blower, or if number of the blowers is increased. Furthermore, larger blower necessitates a larger framework which increases the costs of the tempering furnace as well.

Viewed from a further aspect, there can be provided a method for controlling convection heating of a glass sheet in a tempering furnace, the method comprising:
- pressurizing hot air sucked from the tempering furnace by a blower,
- leading hot pressurized air back to the tempering furnace and towards the glass sheet through a channel system, the channel system comprising
- a division channel arranged in the lengthwise direction of the furnace, and
- plurality of blow enclosures connected to the division channel by connecting openings, which blow enclosures have blow openings from which hot air is discharged as jets towards the glass sheet arranged in a convection heating zone of the tempering furnace,
- the channel system further comprising a first closing device providing a closed position and an open position, wherein the method further comprises
- dividing the channel system in a first and a second sections in the lengthwise direction by positioning the first closing device in its closed position,
- allowing air to flow through the first section to blow openings therein, and
- preventing air to flow in the second section and blow openings therein, thus
- creating thereby a first convection heating zone shorter than the convection heating zone of the tempering furnace in the lengthwise direction of the furnace,
- moving the glass sheet back and forth in the first convection heating zone,
- focusing all the capacity of the blower to said first convection heating zone, thereby
- adding pressure of air and thereby convection of the glass sheet in the first convection heating zone.

Thereby a method for controlling convection heating of a glass sheet in a tempering furnace, which has low running costs, but which provides a highly effective convection of the glass, may be reached.

The tempering furnace and the method are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

Various embodiments of the first aspect may comprise at least one feature from the following paragraphs:
In one embodiment, the first section is closer to a receiving end of the furnace than the second section.

An advantage is that the glass sheet fed in the furnace enters directly in the first convection heating zone and convection heating thereof by high air pressure can be started immediately.

In one embodiment, the length of the first section is in range 60 % - 90 % of the length of the convection heating zone.

An advantage is that pressure of air and thereby convection of the glass sheet may be increased substantially.

In one embodiment, the tempering furnace comprises a second closing device arranged in the channel system on the other side of a feeding outlet of the blower as the first closing device, said second closing device configured to provide a closed position and an open position, wherein the second closing device in its closed position is arranged to divide the channel system in a third and a fourth sections so that air is allowed to flow through the third section to blow openings therein, and prevented to flow in the fourth section and blow openings therein.

An advantage is that alternatives and variations to add pressure of air and thereby convection of the glass sheet in the tempering furnace can be multiplied.

In one embodiment, there is a fifth section in the channel system between the first and the second closing devices arranged in their closed position, and the length of said fifth section is in range 50 % - 70 % of the length of the convection heating zone.

An advantage is that pressure of air and thereby convection of the glass sheet can be added even more.

In one embodiment, the closing device is a guillotine-type closing valve.

An advantage is that any added pressure drop in air flow caused by the closing device in its open position may be minimized. The guillotine-type closing valve is also suitable for use in many kinds of cross sections of the division channel.

In one embodiment, the closing device is a butterfly-type closing valve.

An advantage is that this type of closing devices has a low cost and are light in weight. Furthermore, it does not take extra room outside the channel when arranged in the open position.

In one embodiment, the closing device in its closed position is arranged for closing the division channel.

An advantage is that a simple and reliable solution for dividing the channel system in two sections may be achieved.

In one embodiment, the division channel is attached to a framework of the tempering furnace in an attachment point, and wherein the closing device is arranged in said attachment point.

An advantage is that structural stresses of the closing device caused by thermal expansions of the division channels may be minimized or even eliminated.

In one embodiment, the closing device is arranged at the connecting openings, thereby preventing or allowing air to flow from the division channel to the respective blow enclosures.

An advantage is that an alternative solution to the closing device closing the division channel is provided if the latter solution does not fit to the structure if the tempering furnace.

In one embodiment, the method comprises
- keeping the first closing device closed while the glass sheet is in the first convection heating zone, and
- opening the first closing device as the glass sheet is moving away from the first convection heating zone towards the exit end of said tempering furnace.

An advantage is that pressure of air and thereby convection of the glass sheet in the first convection heating zone may be added substantially, and then, after opening the first closing device, convection is still continued but at lower intensity.

In one embodiment, the channel system comprises a second closing device arranged in the channel system, and the method comprises
- keeping the second closing device closed while the glass sheet is in a part of the tempering furnace between said second closing device and the exit end in the first convection heating zone into which air is flowing from between said second closing device and the exit end of said tempering furnace, and
- opening the second closing device as the glass sheet is moving past it towards the receiving end of said furnace.

An advantage is that a continuing convection of the glass sheet is enabled even in cases where the glass sheet is moved to and fro in all the length of the tempering furnace.

In one embodiment, the method comprises
- moving the glass sheet to and fro in the tempering furnace, and
- opening one of the closing devices as the glass sheet is moving past, while keeping another of said closing devices closed.

An advantage is that a continuing intensified convection of the glass sheet is enabled even in cases where the glass sheet is moved to and fro in all the length of the tempering furnace.

In one embodiment, the method comprises
- keeping the first closing device and the second closing device closed, and
- keeping the glass sheet in the first convection heating zone created by hot air flow flowing from between said first and second closing devices.

An advantage is that an extremely high air pressure towards the glass sheet is created, and thus very intense convection may be achieved.

In one embodiment, the method comprises moving the glass sheet to and fro in the first convection heating zone created by hot air flow flowing from between said first and second closing devices.

An advantage is that a more equalized distribution of effects of the air jets focused from the blow openings to the class sheet may be achieved.

### BRIEF DESCRIPTION OF FIGURES

Some embodiments illustrating the present disclosure are described in more detail in the attached drawings, in which
Figure 1a is a schematic side view of a tempering furnace and a step of a method for controlling convection heating of a glass sheet in a tempering furnace in partial cross-section,
Figure 1b is a schematic side view of the tempering furnace shown in Figure 1a and another step of the method in partial cross-section,
Figure 2a is a schematic side view of another tempering furnace and a step of another method for controlling convection heating of a glass sheet in a tempering furnace in partial cross-section,
Figure 2b is a schematic side view of the tempering furnace shown in Figure 2a and another step of the method in partial cross-section,
Figure 2c is a schematic side view of the tempering furnace shown in Figure 2a and a third step of the method in partial cross-section,
Figure 3a is a schematic top view of a tempering furnace and a method for controlling convection heating of a glass sheet in a tempering furnace in partial cross-section,
Figure 3b is a schematic top view of the tempering furnace shown in Figure 3a and another step of the method in partial cross-section,
Figure 4 is a schematic side view of a tempering furnace and a step of a method for controlling convection heating of a glass sheet in a tempering furnace in partial cross-section,
Figure 5 is a schematic view of a first closing device,
Figure 6 is a schematic view of another first closing device, and
Figure 7 is a schematic top view of a tempering furnace and a method for controlling convection heating of a glass sheet in a tempering furnace in partial cross-section.

In the figures, some embodiments are shown simplified for the sake of clarity. Similar parts are marked with the same reference numbers in the figures.

### DETAILED DESCRIPTION

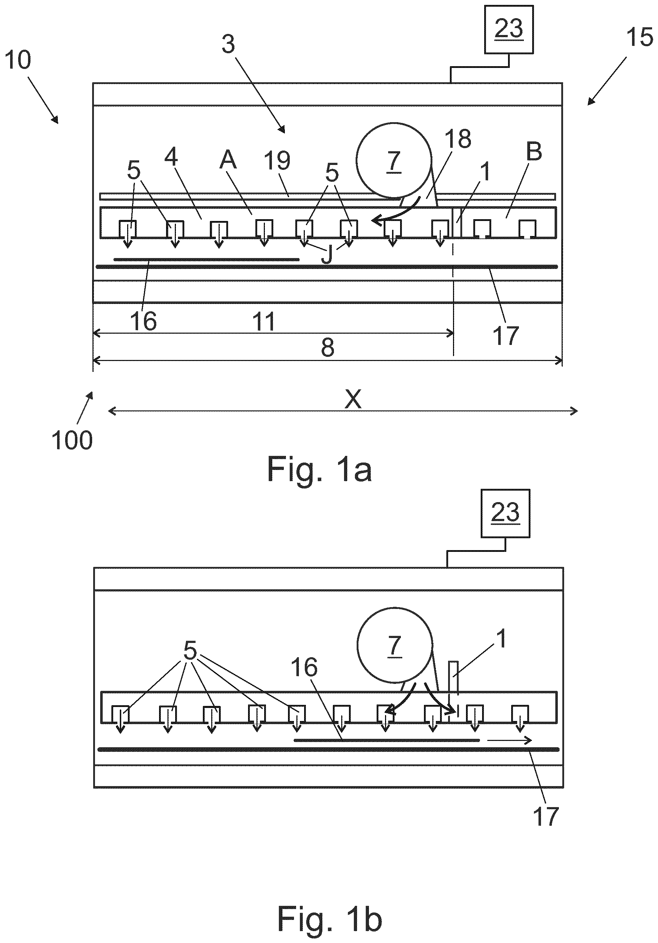

**Figure 1a** is a schematic side view of a tempering furnace and a step of a method for controlling convection heating of a glass sheet in a tempering furnace in partial cross-section, and **Figure 1b** is a schematic side view of the tempering furnace shown in Figure 1a and another step of the method in partial cross-section.

Glass sheets 16 are arranged to move in a tempering or heating furnace 100 (hereafter a furnace) in one direction or back and forth on, e.g., rotating rollers (not shown) of a glass plate conveyor 17. Then, the glass sheets are moved from the furnace 100, at a tempering temperature, either successively, side by side, or as mixed glass loadings along a roller track (not shown) to a tempering cooling unit (not shown) following the furnace.

The furnace 100 may be a roller furnace provided with a roller track. Alternatively, the furnace 100 may be based on a so-called glass flotation technology, where a glass sheet floats supported by a thin airbed and touches the rollers of a conveyor track or other conveying members by one of its side edges, only.

In the furnace 100, glass sheets are heated to a tempering temperature that is typically from 610 to 680°C, depending on the thickness of the glass. The temperature inside the furnace 100 is typically 700°C. The heating of a glass sheet typically takes 40 s per one mm of glass thickness, that is, 160 seconds for the glass thickness of 4 mm, for example. The thickness of glass sheets to be tempered is usually 1 to 25 mm.

In the furnace 100 heat or heat energy may be transferred to the glass by radiating from the inner surfaces of the furnace, by convection from air, and by direct conduction from the contact points of the conveyor and the glass sheet. The furnace 100 may be provided with heating elements 19, such as electric resistors. Also gas burners can be used.

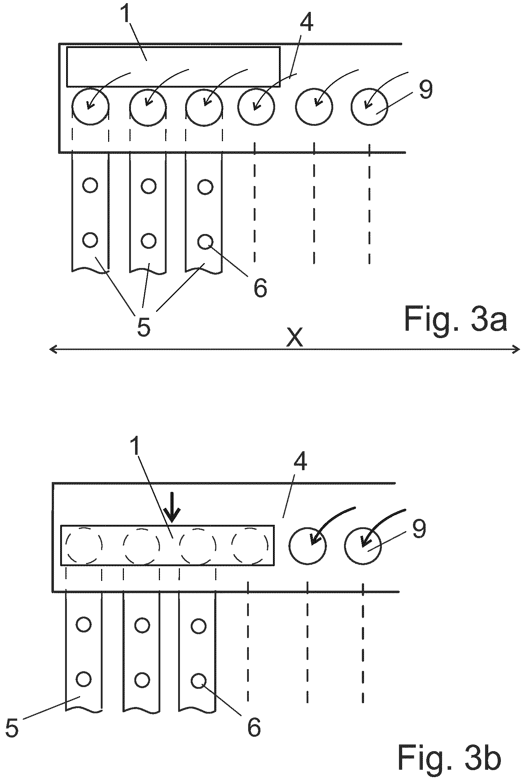

The electric resistors are typically oblong elements where a resistance wire is winding around a ceramic core. The heating element 19 may be arranged above or below the glass plate conveyor 18. Additionally or alternatively, the heating element 19 may be arranged inside a blow enclosure 5 (such as shown in Figure 3a), and/or in connection with a blower 7, such as at the suction inlet of thereof.

The heating elements 19 are typically independently controlled, or they are arranged to groups of heating elements that are independently controlled.

In convection (or to be more precise, forced convection), air streams are directed to the surfaces of the glass sheet by means of a channel system 3. The forced convection in the furnace 100 may be directed to the upper surface of the glass sheet, to the lower surface of the glass sheet, or to both the upper surface and the lower surface of the glass sheet. For simplifying the current disclosure, the Figures are showing embodiments where forced convection is directed only to the upper surface of the glass sheet.

The tempering furnace 100 comprises a blower 7 that pressurizes air sucked from the tempering furnace. The blower 7 is connected to the channel system 3 that feeds said air back in the tempering furnace and directs it to the surfaces of the glass sheet 16.

The channel system 3 comprises at least one division channel 4, plurality of blow enclosures 5 (shown in Figures 3a, 3b) connected to the division channel 4 by connecting openings 9, and blow openings 6 arranged to the blow enclosures 5.

In one embodiment, the channel system 3 comprises one division channel 4. In another embodiment, the channel system 3 comprises two division channels 4 that are arranged in parallel on both sides of the furnace.

In one embodiment, the furnace 100 comprises at least two furnace portions that are attached successively one after another in the lengthwise direction X of the furnace. Each of said furnace portions comprises a section of a division channel that constitutes the division channel 4 when connected to each other.

The division channel 4 is arranged in the lengthwise direction X of the furnace. In one embodiment, the length of the furnace 100 is at least 3 meters.

Typically, the division channel extends on the whole length (parallel with the lengthwise direction X of the furnace) of the convection heating zone 8. The cross-sectional shape of the divisional channel 4 may be roundish, such as round, or polygonal, such as quadrangular.

The plurality of blow enclosures 5 extend sideways from the division channel 4, typically in a horizontal plane. In one embodiment, the blow enclosures 5 extend perpendicularly from the division channel 4, i.e. perpendicular to the lengthwise direction X of the furnace. The cross-sectional shape of the blow enclosure 5 may be roundish, such as round, or polygonal, such as quadrangular.

The blow enclosures 5 have blow openings 6 (such as shown in Figures 3a, 3b) from which hot air is discharged as jets J towards the glass sheet 16 that is arranged in the convection heating zone 8 of the tempering furnace. Flow of air from the blower 7 through the channel system 3 towards the glass sheet 16 is controlled by a first closing device 1. The first closing device 1 is arranged in the channel system 3 and it is configured to provide a closed position and an open position. In one embodiment, the closing device 1 is arranged in the division channel 4. The closing device 1 arranged in the closed position cuts said division channel into two sections in a first section A and a second section B.

The first closing device 1 is shown in Figure 1a in its closed position. In this position, the first closing device 1 divides the channel system 3 in the first section A and the second section B. The first closing device allows pressurized hot air from the blower 7 to flow in the first section A and all the way through it to blow openings 6 thereof but prevents or blocks air flow to the second section B and blow openings 6 therein. Thus, the first closing device 1 creates a first convection heating zone 11 shorter in the lengthwise direction x of the tempering furnace than the convection heating zone 8. On other words, the first convection heating zone 11 is shorter than the division channel 4. All the capacity of the blower 7 and heat energy of the air pressurized thereby are focusing to said first convection heating zone 11, thereby pressure of air is raised and convection of the glass sheet 16 in the first convection heating zone 11 is increased compared to situation where the first closing device 10 is in its opened position and allows air to flow to the entire length of convection heating zone 8. The need for blowing hot air with raised pressure against the top side of the glass sheet is particularly high at the beginning of the heating process taking place in the tempering furnace.

In one embodiment, the length of the glass loading, i.e. its length in the lengthwise direction X of the furnace, is limited based on the length of the first convection heating zone 11. In one embodiment, the length of the glass loading is selected so that it fits in the first convection heating zone 11. In one embodiment, the length of the glass loading is selected so that it may be moved to and fro in the first convection heating zone 11. Said movement to and fro may then carried out until the desired level of convection heating is reached in the glass loading, after which the glass loading may be removed from the first convection heating zone 11, e.g., to another part of the furnace or out from the furnace.

In one embodiment, such as shown in Figures 1a, 1b, the first section A is arranged closer to a receiving end 10 of the furnace than the second section B. This means that the blower 7 is connected to the division channel 4 between the receiving end 10 and the first closing device 1. This connection may be realized by e.g. a feeding outlet 17. Thus, the glass sheet 16 meets raised pressure of air and increased convection immediately when entering in the tempering furnace 100 and makes it possible the proper tempering of very demanding types of LOW-E glass, for instance. In one embodiment, the length of the glass sheet(s) 16 is at least substantially as the length of the first convection heating zone 11.

In one embodiment, the first section A is arranged closer to an exit end 15 of the furnace than the second section B.

In one embodiment, the length of the first section A is in range 60 % - 90 % of the length of the convection heating zone 8. This may enable the blower 7 to raise the air pressure in the first section A about 10% - 30% compared to situation where the blower is feeding air to all the length of the convection heating zone 8.

In Figure 1b the first closing device 1 is shown in its open position. Thus, the first closing device allows pressurized hot air from the blower 7 to flow not only in the first section A but also in the second section B. As the channel system 3 is composed of said first and second sections A, B, air is allowed to flow from the blower 7 into all length of the division channel 4, and thus air is discharged as jets towards the glass sheet 16 wherever part of the convection heating zone 8 it is placed.

In one embodiment of the method for controlling convection heating of a glass, the first closing device 1 is kept closed while the glass sheet 16 is in the first convection heating zone 11, for instance oscillating therein, and opened when the glass sheet 16 is moving away from the first convection heating zone - or past the first closing device - towards the exit end 15 of said tempering furnace.

The function of the first closing device 1 is controlled by a control unit 23. The control unit 23 receives information from e.g. a sensor or other device (s) (not shown) that produces data about e.g. the position of the glass sheet in the tempering furnace. In one embodiment, the data is provided by sensor(s) or other device(s) indirectly observing the position, such as a servo motor of the conveyor or a pulse sensor that is connected to the conveyor. In still another embodiment, the data is provided by one or more sensor(s) or other device(s) directly sensing or observing the position of the glass sheet in the tempering furnace, such as optical or ultrasonic sensors.

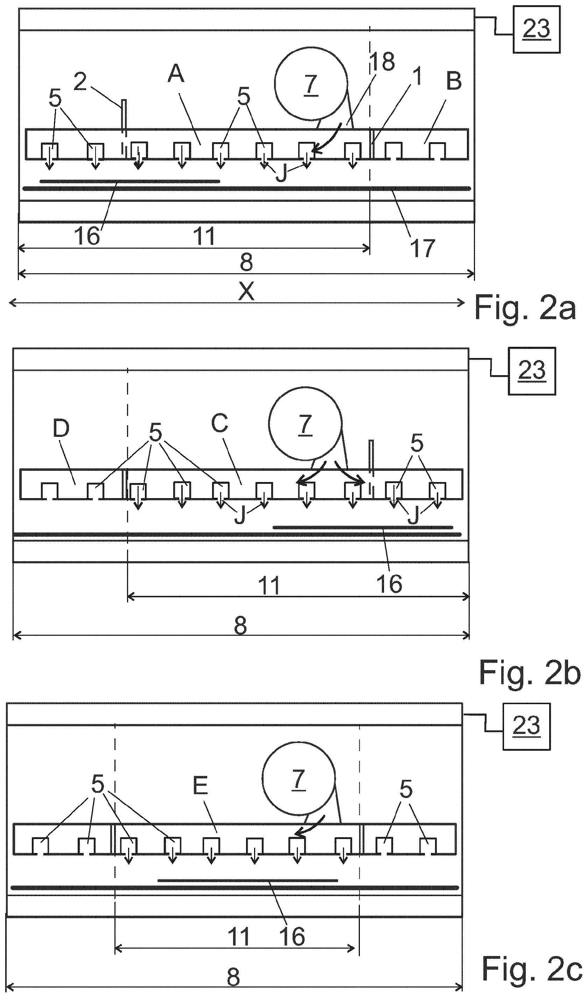

**Figure 2a** is a schematic side view of another tempering furnace and a step of another method for controlling convection heating of a glass sheet in a tempering furnace in partial cross-section, **Figure 2b** is a schematic side view of the tempering furnace shown in Figure 2a and another step of the method in partial cross-section, and **Figure 2c** is a schematic side view of the tempering furnace shown in Figure 2a and a third step of the method in partial cross-section.

In one embodiment, the tempering furnace is provided not only with the first closing device 1 but also with a second closing device 2. The second closing device 2 is arranged in the channel system 3 on the other side of the blower 7 as the first closing device 1. In one embodiment, the blower 7 is connected by a feeding outlet 18 to the division channel 4 that is arranged to feed air between the first closing device 1 and the second closing device 2.

The second closing device 2 is configured to provide a closed position and an open position so that in the closed position said second closing device 2 is arranged to divide the channel system 3 in a third section C and a fourth section D whereby air is allowed to flow through the third section C to blow openings 6 arranged therein, but prevented to flow in the fourth section D and blow openings 6 therein. This position of the closing devices 1, 2 and method step is shown in Figure 2b.

In one embodiment, the second closing device 2 is positioned in the channel system 3 such that when arranged in its closed position, it closes the division channel 4.

The tempering furnace 100 that comprises the second closing device 2 may be used e.g. so that the second closing device is kept closed while the glass sheet 16 is in the first convection heating zone 11 into which air is flowing from between said second closing device and the exit end 15 of said tempering furnace. Thus, the convection of the glass sheet is intensified in the first convection heating zone 11 that extends from the exit end 15 towards the receiving end 10 and is aligned with the third section C of the channel system.

Additionally, the combination of the first and the second closing devices 1, 2 provides a fifth section E in the channel system 3 between the first and the second closing devices 1, 2 when both said closing devices are arranged in their closed position. This position of the closing devices 1, 2 and method step is shown in Figure 2c. Herein the first convection heating zone 11 is limited by both the first and the second closing devices 1, 2. When both the first and the second closing devices 1, 2 are arranged in their closed position, a highly intensified convention may be directed to the glass sheet that lies or is moving in the first convection heating zone 11. Thus, even the most demanding types of LOW-E glass, for instance, can be properly tempered.

In one embodiment, the length of the fifth section E is selected in range of 50 % - 70 % of the length of the convection heating zone 8.

In one embodiment of the method, the glass sheet or sheets 16 is/are loaded in the furnace through the receiving end 10 while keeping the first closing device 1 in its closed position and the second closing device 2 in its open position. Thus, air is not flowing through the second section B but only through the first section A towards the glass sheet (s) . The glass sheet (s) 16 is/are transported by the conveyor 17 towards the exit end 15 of the tempering surface. When the glass sheet(s) is/are approaching the first closing device 1, it is moved to the open position. Thus, air is now allowed to flow through the second section B towards the glass sheet(s). When the glass sheet(s) is/are passed the second closing device 1, it may be moved to its closed position. Thus, air is not allowed to flow through the fourth section D towards the glass sheet(s). These positions of the closing devices, i.e. the first one open and the second one closed, can be maintained until the glass sheet(s) has/have left the tempering furnace. However, it is to be noted that during some method steps both the first and the second closing devices 1, 2 can be kept in their open position simultaneously.

In one embodiment of the method, the glass sheet (s) 16 is/are moved to and fro in the tempering furnace by the conveyor. Then, depending on the extent of the to and fro motion in relation to the distance between the first and the second closing devices 1, 2, one of the closing devices 1, 2 can be moved from its closed position to open position as the glass sheet 16 is moving past, while keeping another of said closing devices closed.

In one embodiment of the method, both the first and second closing devices 1, 2 are in their closed position, i.e. heated air is allowed to flow only to the fifth section E. This may enable the blower 7 to raise the air pressure in the fifth section E about 20% - 40%, for instance, compared to situation where the blower is feeding air to all the length of the convection heating zone 8. In this embodiment, the length of the glass sheet or sheets loaded in the tempering furnace may be limited to the length of the fifth section E. The glass sheet 16 may optionally be moved by the conveyor 17 to and fro in the first convection heating zone 11 into which said air is directed by the blow openings 6 belonging to the fifth section E. Said movement is then carried out until the desired level of convection heating is reached in the glass sheet. Then, the conveyor is controlled to transport the glass sheet forwards, e.g. out from the furnace through the exit end 15.

The function of the first and the second closing devices 1, 2 is controlled by a control unit 23 similar way as described earlier in this description.

**Figure 3a** is a schematic top view of a tempering furnace and a method for controlling convection heating of a glass sheet in a tempering furnace in partial cross-section, and **Figure 3b** is a schematic top view of the tempering furnace shown in Figure 3a and another step of the method in partial cross-section.

As already disclosed, the closing device 1, 2 may be arranged to close the division channel 4. In another embodiment, the closing device 1, 2 is arranged at the connecting openings 9, thereby preventing or allowing air to flow from the division channel 4 to the respective blow enclosures 5 and creating at least one of the sections A-E of the channel system. In other words, air is allowed to flow in all the length of the division channel 4, but from there only to those blow enclosures 5 and blow openings thereof that are open to the division channel 4.

The closing device 1, 2 arranged at the connecting openings 9 may comprise e.g. a plate that is arranged to slide from the closed to the open position. The sliding direction may be perpendicular to the lengthwise direction X of the furnace, such as shown in Figures 3a, 3b, or parallel with the lengthwise direction X or any combination of perpendicular and parallel directions.

In one embodiment, such as shown in Figures 3a, 3b, the blow enclosure 5 that is connected by the connecting opening 9 to the division channel 4 is a simple channel or tube that may be straight and connected perpendicularly or at least divergently to the division channel. The blow openings 6 are provided in this perpendicularly or at least divergently arranged channel.

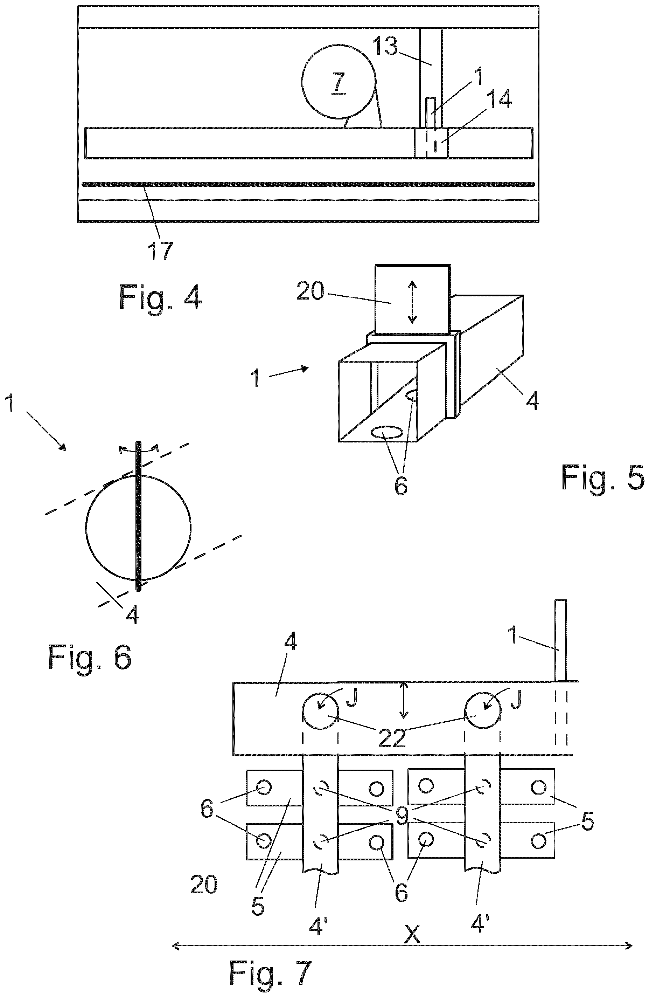

In one embodiment, the division channel has a branching structure comprising branching parts or sections 4' branch or diverge from the "main" division channel 4, such as shown in **Figure 7****.** In this embodiment, the blow enclosures 5 are arranged parallel (or more parallel than perpendicular) to the lengthwise direction X of the furnace. The blow enclosures 5 are connected to the blower through the branching parts or sections 4', second connecting openings 22 and the "main" division channel 4. The blow openings 6 are arranged in said blow enclosures 5. In case the first closing device 1 (or the second one) is in its open position, air is flowing from the "main" division channel 4 through second connecting openings 22 to the branching parts 4' of the division channel, to the blow enclosures 5 and finally through the blow openings 6 towards the glass sheet.

**Figure 4** is a schematic side view of a tempering furnace and a step of a method for controlling convection heating of a glass sheet in a tempering furnace in partial cross-section.

The tempering furnace 100 comprises a framework 13 that supports the structure of the tempering furnace and e.g. functions as a mount for components and parts thereof. In one embodiment, the division channel 4 is attached to the framework 13 of the tempering furnace in an attachment point 14. In one embodiment, the attachment point 14 is arranged at a middle part of the division channel 4, whereas the ends of said division channel are free to move due to thermal expansions. In one embodiment, the closing device 1, 2 arranged for closing the division channel is mounted in said attachment point 14, i.e. to point where changes of dimensions of the division channel due to thermal expansions are minimized.

**Figure 5** is a schematic view of a first closing device and **Figure 6** is a schematic view of another first closing device.

The first and the second closing device 1, 2 is of on/off type. In one embodiment, the closing device 1, 2 is a guillotine-type closing valve, such as shown in Figure 5. This comprises a blade 20 that is able to fully retract out of the air flow, minimizing any added pressure drop. In Figure 5 the guillotine-type closing valve is arranged in a division channel 4 having rectangular cross-section, but the type is also suitable for other cross-sections, such as round.

In one embodiment, the closing device 1, 2 is a butterfly-type or wafer-type closing valve, such as shown in Figure 6. A valve disc 21 of the butterfly-type opens and closes with a rotation of 90 degrees.

In Figure 6 the butterfly-type closing valve is arranged in a division channel 4 having round cross-section, but the type is also suitable for other cross-sections, such as square or rectangular varieties.

It is to be noted that in embodiments including both the first and the second closing valves 1, 2, both closing valves may be of same type, but this is not necessary always the case.

The first and the second closing devices 1, 2 are used by respective actuators (not shown), the function of which may be based on e.g. pressurized fluid, such as air or liquid, or electric motor or servo motor. The function of the actuators is controlled by a controller (not shown) that is preferably a part of the overall control system of the tempering furnace.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: first closing device
- 2: second closing device
- 3: channel system
- 4, 4': division channel
- 5: blow enclosure
- 6: blow opening
- 7: blower
- 8: entire convection heating zone
- 9: connecting opening
- 10: receiving end
- 11: first convection heating zone
- 12: part of the first section
- 13: framework
- 14: attachment point
- 15: exit end
- 16: glass sheet
- 17: conveyor
- 18: feeding outlet
- 19: heating element
- 20: blade
- 21: disc
- 22: second connecting opening
- 23: control unit
- 100: tempering furnace
- A-E: section of channel system
- J: jet of air
- X: lengthwise direction of the furnace

## Claims

1. A tempering furnace (100) for a glass sheet, comprising
- a blower (7) pressurizing air sucked from the tempering furnace,
- the blower (7) connected to a channel system (3) for feeding said air back in the tempering furnace, the channel system (3) comprising
- a division channel (4), and
- plurality of blow enclosures (5) connected to the division channel (4) by connecting openings (9), which blow enclosures (5) have blow openings (6) from which hot air is discharged as jets in a convection heating zone (8) of the tempering furnace, the tempering furnace further comprising
- a first closing device (1) arranged in the channel system (3), said first closing device (1) configured to provide a closed position and an open position, wherein
- the division channel (4) is arranged in the lengthwise direction (X) of the furnace, that
- the first closing device (1) in its closed position is configured to
- divide the channel system (3) in a first and a second sections (A, B) in the lengthwise direction (X) so that air is
-- allowed to flow through the first section (A) to blow openings (6) therein, and
-- prevented to flow in the second section (B) and blow openings (6) therein, thus
- creating a first convection heating zone (11) in the tempering furnace shorter than the convection heating zone (8) in the lengthwise direction (x) of the tempering furnace,
- thereby adding convection of the glass sheet in the first convection heating zone (11), and that
- the tempering furnace (100) further comprises a glass plate conveyor (17) configured to move a glass sheet (16) back and forth in the first convection heating zone (11) .

2. The tempering furnace as claimed in claim 1, wherein
- the first section (A) is closer to a receiving end (10) of the furnace than the second section (B).

3. The tempering furnace as claimed in claim 1 or 2, wherein
- the length of the first section (A) is in range 60 % - 90 % of the length of the convection heating zone (8).

4. The tempering furnace as claimed in any of the preceding claims, comprising
- a second closing device (2) arranged in the channel system (3) on the other side of a feeding outlet (18) of the blower (7) as the first closing device (1),
- said second closing device (2) configured to provide a closed position and an open position, wherein
- the second closing device (2) in its closed position is arranged to
- divide the channel system (3) in a third and a fourth sections (C, D) so that air is
-- allowed to flow through the third section (C) to blow openings (6) therein, and
-- prevented to flow in the fourth section (D) and blow openings (6) therein.

5. The tempering furnace as claimed in claim 4, wherein
- there is a fifth section (E) in the channel system (3) between the first and the second closing devices (1, 2) arranged in their closed position, and
- the length of said fifth section (E) is in range 50 % - 70 % of the length of the convection heating zone (8).

6. The tempering furnace as claimed in any of the preceding claims, wherein
- the closing device (1, 2) is a guillotine-type closing valve.

7. The tempering furnace as claimed in any of claims 1 - 5, wherein
- the closing device (1, 2) is a butterfly-type closing valve.

8. The tempering furnace as claimed in any of the preceding claims, wherein
- the closing device (1, 2) in its closed position is arranged for closing the division channel (4).

9. The tempering furnace as claimed in claim 8, wherein
- the division channel (4) is attached to a framework (13) of the tempering furnace in an attachment point (14), and wherein
- the closing device (1, 2) is arranged in said attachment point (14).

10. The tempering furnace as claimed in any of claims 1 - 7, wherein
- the closing device (1, 2) is arranged at the connecting openings (9), thereby preventing or allowing air to flow from the division channel (4) to the respective blow enclosures (5).

11. A method for controlling convection heating of a glass sheet in a tempering furnace (100), the method comprising:
- pressurizing hot air sucked from the tempering furnace by a blower (7),
- leading hot pressurized air back to the tempering furnace and towards the glass sheet (16) through a channel system (3), the channel system (3) comprising
- a division channel (4) arranged in the lengthwise direction (X) of the furnace, and
- plurality of blow enclosures (5) connected to the division channel (4) by connecting openings (9), which blow enclosures (5) have blow openings (6) from which hot air is discharged as jets towards the glass sheet (16) arranged in a convection heating zone (8) of the tempering furnace,
- the channel system (3) further comprising a first closing device (1) providing a closed position and an open position, wherein the method further comprises
- dividing the channel system (3) in a first and a second sections (A, B) in the lengthwise direction (X) by positioning the first closing device (1) in its closed position,
- allowing air to flow through the first section (A) to blow openings (6) therein, and
- preventing air to flow in the second section (B) and blow openings (6) therein, thus
- creating thereby a first convection heating zone (11) shorter than the convection heating zone (8) of the tempering furnace in the lengthwise direction (X) of the furnace,
- moving the glass sheet (16) back and forth in the first convection heating zone (11),
- focusing all the capacity of the blower (7) to said first convection heating zone (11), thereby
- adding pressure of air and thereby convection of the glass sheet (16) in the first convection heating zone (11).

12. The method as claimed in claim 11, comprising
- keeping the first closing device closed while the glass sheet (16) is in the first convection heating zone (11), and
- opening the first closing device as the glass sheet (16) is moving away from the first convection heating zone towards the exit end (15) of said tempering furnace.

13. The method as claimed in claim 11 or 12, wherein
- the channel system (3) comprises a second closing device (2) arranged in the channel system (3), the method comprising
- keeping the second closing device closed while the glass sheet (16) is in the first convection heating zone (11) into which air is flowing from between said second closing device and the exit end (15) of said tempering furnace, and
- opening the second closing device (2) if the glass sheet (16) is moving past it towards the receiving end (10) of said furnace.

14. The method as claimed in claim 13, comprising
- moving the glass sheet (16) to and fro in the tempering furnace, and
- opening one of the closing devices (1, 2) as the glass sheet (16) is moving past, while keeping another of said closing devices closed.

15. The method as claimed in claim 13, comprising
- keeping the first closing device (1) and the second closing device (2) closed, and
- moving the glass sheet (16) to and fro in the first convection heating zone (11) created by hot air flow flowing from between said first and second closing devices (1, 2).
